# FASCICULE DE BREVET EUROPEEN

(11) **EP 1 474 022 B1**
(45) Date de publication et mention de la délivrance du brevet: **13.12.2006**
(21) Numéro de dépôt: 03717372.1
(22) Date de dépôt: 03.02.2003
(51) Int. Cl.: A47J 31/41

(54) **APPAREIL POUR PREPARER DES BOISSONS CHAUDES, NOTAMMENT DES POTAGES**
APPARAT ZUM HERSTELLEN VON HEISSGETRÄNKEN, INSBESONDERE VON SUPPEN
APPARATUS FOR PREPARING HOT BEVERAGES, IN PARTICULAR SOUPS

(30) Priorité: 05.02.2002 FR 0201312
(43) Date de publication de la demande: 10.11.2004
(73) Titulaire: François, Jean-Jacques, 22370 Pleneuf Valandre (FR)
(72) Inventeur: François, Jean-Jacques, 22370 Pleneuf Valandre (FR)
(74) Mandataire: Poupon, Michel
(86) Numéro de dépôt international: PCT/FR2003/000329
(87) Numéro de publication internationale: WO 2003/065860

(56) Documents cités:
- WO-A-00/16674
- WO-A-01/76429
- US-A- 3 641 918
- US-A- 6 073 539

## Description

La présente invention concerne un appareil électrique pour préparer une boisson chaude.

Elle se rapporte plus particulièrement à un appareil électrique destiné à préparer des boissons chaudes liquides préemballées dans une poche aseptique.

On connaît déjà dans l'état de la technique des appareils électriques pour préparer des boissons chaudes, notamment du café, par transformation de l'eau en vapeur et mise en contact de la vapeur et de son condensat avec des ingrédients, souvent lyophilisés, permettant la confection de la boisson préalablement dosée et préemballée. Un appareil similaire est connu du document US 6073539.

De tels appareils électriques ne permettent pas de préparer des boissons chaudes à partir d'un ingrédient liquide quasiment prêt à l'emploi ne nécessitant qu'un chauffage de celui-ci.

Ainsi, la présente invention concerne un appareil nouveau pour préparer de telles boissons, notamment des potages.

A cet effet, la présente invention a pour objet un appareil pour préparer des boissons chaudes, notamment des potages, caractérisé en ce qu'il comprend un bâti à l'intérieur duquel sont agencés des moyens pour chauffer de l'eau arrivant d'un réseau d'eau potable ou encore d'un récipient et la transformer en vapeur sous pression et des moyens pour diriger cette vapeur vers une chambre qui est traversée par un conduit d'évacuation dans lequel passe la boisson liquide à préparer, ladite boisson étant acheminée à ce conduit jusqu'à un contenant par des moyens de distribution séquentielle de la boisson stockée dans une enveloppe aseptique agencée dans un réceptacle rapporté amovible logé dans le bâti.

De façon avantageuse, le réceptacle de la boisson à préparer est constitué de quatre parois latérales formant un parallélépipède dont l'une au moins est amovible et d'un fond également amovible qui est muni d'une ouverture pour le passage des moyens de connexion entre l'enveloppe et les moyens de distribution séquentielle.

Dans un mode de réalisation avantageux de l'invention, les moyens de distribution séquentielle de la boisson sont constitués d'une pompe péristaltique composée d'un bâti sur lequel est fixé un moteur dont l'axe entraîne en rotation un porte-galets supportant des galets en contact avec un tube déformable relié par l'une de ses extrémités à la poche aseptique contenant la boisson et à son extrémité opposée au conduit d'évacuation de la boisson.

Préférentiellement, le tube déformable comporte un moyen de connexion avec des moyens conjugués de la poche aseptique du type collerette vissable, et en ce que ce moyen de connexion comporte des moyens de perforation de ladite poche.

Toujours selon l'invention, la chambre de chauffage et le conduit d'évacuation sont agencés sur un même support amovible désigné « bec distributeur ».

Dans un exemple préférentiel de l'invention, le bec distributeur amovible est composé d'un premier tube disposé sensiblement verticalement en position d'utilisation dans l'appareil, raccordé perpendiculairement à un second tube, notamment par soudure formant le raccord au conduit de la sortie de vapeur sous pression, et d'un troisième tube monté coaxialement, notamment par l'intermédiaire de bagues, à l'intérieur du premier tube formant le conduit d'évacuation.

Avantageusement, la sortie de la vapeur est pourvue d'un moyen de raccord rapide avec obturation de l'orifice permettant la jonction avec le deuxième tube du bec distributeur et évitant tous risques d'échappement de la vapeur lors de la déconnexion dudit bec.

Préférentiellement, l'appareil comprend un moyen de pilotage, du type calculateur, des moyens de distribution et des moyens pour chauffer l'eau, actionné par au moins un contacteur.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en perspective éclatée de l'appareil selon la présente invention, et
- la figure 2 est un schéma de principe du fonctionnement de l'appareil selon l'invention.

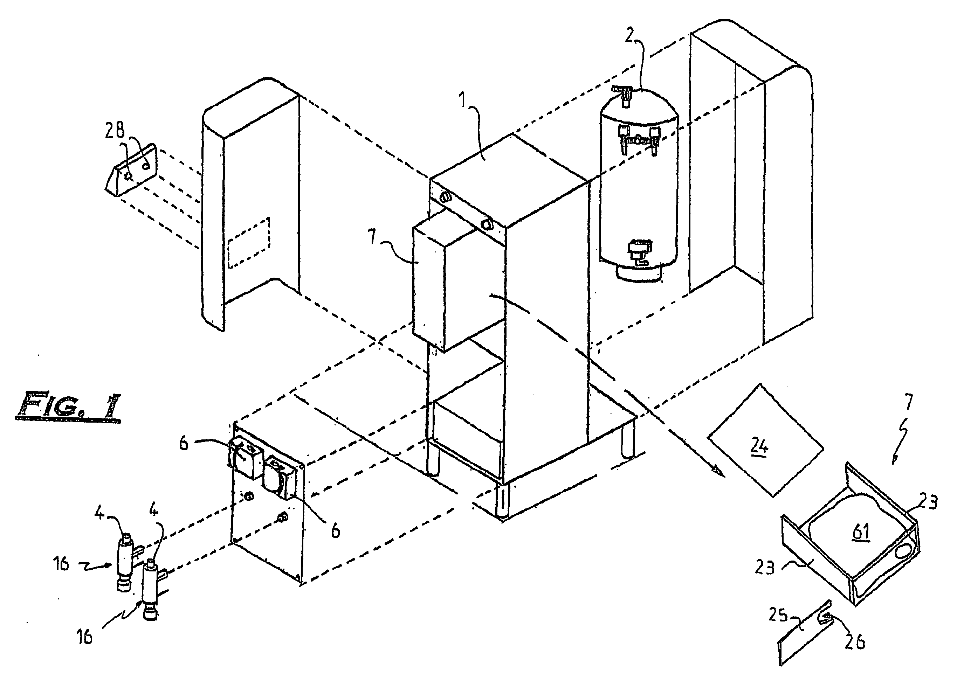

On voit sur la figure 1 un appareil pour préparer des boissons chaudes selon l'invention, par exemple un appareil à faire des potages, qui comprend un bâti 1 à l'intérieur duquel sont agencés des moyens 2 pour chauffer de l'eau arrivant d'un réseau d'eau potable ou encore d'un récipient et la transformer en vapeur sous pression et des moyens pour diriger cette vapeur vers une chambre de chauffage 3 qui est traversée par un conduit d'évacuation 4 dans lequel passe la boisson liquide à préparer, ladite boisson étant acheminée à ce conduit jusqu'à un contenant 5 par des moyens de distribution séquentielle 6 de la boisson stockée dans une enveloppe aseptique 61 agencée dans un réceptacle 7 rapporté amovible logé dans le bâti 1.

On notera que l'appareil représenté à la figure 1 permet la distribution de deux boissons simultanément, celui-ci étant muni de deux enveloppes aseptiques 61.

Les moyens 2 de production de la vapeur d'eau sous pression sont par exemple constitués d'un chauffe-eau classique relié par un conduit 8 à l'arrivée d'eau issue soit du réseau d'eau potable soit d'un récipient et entre lesquels est interposée une pompe sur-presseur 9 pour permettre l'introduction de l'eau dans un chauffe-eau 71.

Un conduit 10 agencé à la sortie du chauffe-eau 71 assure l'acheminement de la vapeur sous pression vers la chambre de chauffage 3 de la boisson.

Les moyens de distribution séquentielle 6 de la boisson sont avantageusement constitués d'une pompe péristaltique. De manière classique cette pompe péristaltique est composée d'un bâti 11 sur lequel est fixé un moteur dont l'axe 0 entraîne en rotation un porte-galets 12 supportant au moins trois galets 13 disposés chacun selon un angle de 120 degrés par rapport à l'axe de rotation 0. Ces galets 13 sont en contact avec un tube déformable 14 relié par l'une de ses extrémités à la poche aseptique 61 contenant la boisson et à son extrémité opposée au conduit d'évacuation 4 de la boisson. L'espace délimité entre deux galets 13 correspond à une dose prédéterminée de boisson distribuée lors de la rotation de la pompe.

On notera qu'afin d'éviter tout contact de la boisson avec la main d'un opérateur, le tube déformable 14 comporte des moyens de connexion 15 avec la poche aseptique 61 du type collerette vissable qui est munie de moyens de perforation (non représentés) de ladite poche 61.

L'écrasement de ce tube 14 entre les galets 13 et le bâti 11 de la pompe provoque, derrière la zone écrasée, une dépression dans le tube 14 qui se remplit aussitôt d'une portion prédéterminée de boisson. La quantité de boisson liquide emprisonnée dans le tube entre deux galets est alors pulsée vers la sortie du conduit jusqu'au conduit d'évacuation puis, par la pesanteur jusqu'au contenant 5.

Afin d'assurer un entretien aisé de l'appareil, la chambre de chauffage 3 et le conduit d'évacuation 4 sont agencés sur un même support amovible désigné dans la suite de la description « bec distributeur » désigné par la référence générale 16.

Ce bec distributeur 16 amovible est donc composé d'un premier tube 17 disposé sensiblement verticalement en position d'utilisation dans l'appareil, raccordé perpendiculairement à un second tube 18, notamment par soudure formant le raccord au conduit 10 de la sortie de vapeur sous pression, et d'un troisième tube monté coaxialement, notamment par l'intermédiaire de bagues 21 et 22, à l'intérieur du premier tube formant le conduit d'évacuation 4.

On constate que la chambre de chauffage 3 est formée entre le troisième tube ou conduit d'évacuation 4 et le premier tube 17. Afin d'assurer un échange thermique suffisant entre la vapeur et la boisson permettant son chauffage à une température de l'ordre de 75°C, le troisième tube 4 comporte sur sa longueur au moins trois orifices 19, préférentiellement quatre, permettant le passage d'une partie de la vapeur sous pression vers la boisson. Ces orifices 19 permettent en outre également après la fin d'un cycle de distribution qui sera détaillé ci-dessous de décoller les particules éventuellement collées à l'intérieur du conduit d'évacuation 4 lors de la distribution notamment d'un potage.

Afin d'assurer une sécurité vis-à-vis d'un opérateur lors de l'entretien de l'appareil, le conduit 10 de la sortie de la vapeur est pourvu d'un moyen de raccord rapide 20 avec obturation de l'orifice permettant la jonction avec le deuxième tube 18 du bec distributeur 16, évitant ainsi tous risques d'échappement de la vapeur lors de la déconnexion dudit bec 16.

On peut voir sur la figure 1, le détail d'un mode de réalisation d'un réceptacle 7 de la boisson à préparer qui est contenu dans une enveloppe aseptique 61. Ce réceptacle 7 est avantageusement constitué de quatre parois latérales 23 formant un parallélépipède dont l'une 24 au moins est amovible et d'un fond 25 également amovible qui est muni d'une ouverture 26 pour le passage des moyens de connexion 15 entre l'enveloppe et les moyens de distribution séquentielle 6 mentionné ci-dessus.

De telles parois amovibles 24 et 25 au réceptacle 7 permettent avantageusement d'assurer un positionnement adéquat de l'enveloppe 61, sans risque de déchirure.

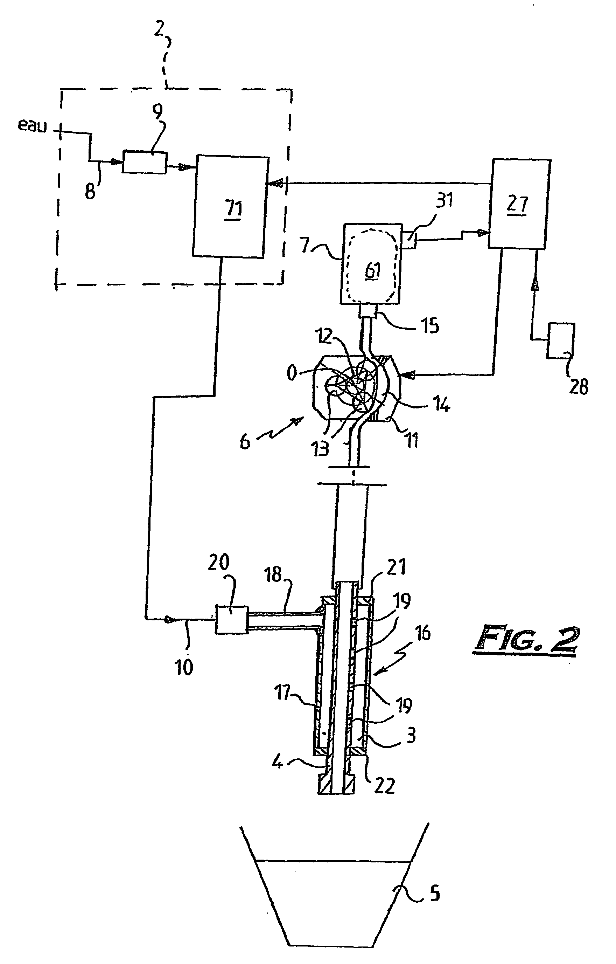

L'appareil est en outre pourvu, comme on peut le voir schématiquement sur la figure 2, d'un moyen de pilotage 27, du type calculateur, des moyens de distribution 6 et des moyens de chauffage 2 de l'eau actionné par exemple au moyen de contacteurs 28 ou un moyen équivalent.

Le fonctionnement de l'appareil selon l'invention ressort déjà de la description qui en a été faite ci-dessus et va être maintenant expliqué en relation avec les figures 1 et 2.

Lors d'une action sur un contacteur 28 disposé par exemple sur la face extérieure de l'appareil, le moyen de pilotage 27 ou calculateur va entraîner la production de vapeur jusqu'à la chambre 3 du bec distributeur 16 puis cumulativement à la production de la vapeur, le démarrage des moyens de distribution 6, à savoir la pompe péristaltique afin d'acheminer séquentiellement une portion prédéterminée de la boisson à préparer vers le conduit d'évacuation 4 et ce jusqu'au volume total de quantité de boisson désirée, par exemple 250 ml.

On constate que le passage d'une portion déterminée de boisson successivement permet un échange thermique suffisant entre la boisson et la vapeur pour amener en température la boisson à préparer.

Dès la fin de la distribution de la quantité de boisson désirée, la vapeur est évacuée dans la chambre de chauffage 3 durant un temps prédéterminé de l'ordre de 1 seconde permettant avantageusement de décoller les particules du conduit d'évacuation.

Une nouvelle commande peut alors est opérée sur l'appareil par appui sur le contacteur 28.

Des moyens de commande de rinçage (non représentés) de l'appareil sont également agencés à l'intérieur de l'appareil afin de permettre, notamment lors d'un changement d'une enveloppe aseptique 61, un nettoyage complet de celui-ci. Ces moyens de rinçage sont par exemple constitués d'un interrupteur commandant uniquement pendant un laps de temps de l'ordre de 3 à 5 secondes le fonctionnement uniquement des moyens 2 de production de vapeur jusqu'au bec distributeur 16.

On notera que le moyen de pilotage 27 peut permettre de contrôler également le renouvellement de l'enveloppe aseptique 61 d'une part en terme de durée de validité de la consommation, par exemple pour un potage, la durée de validité est de 24 heures et d'autre part en terme de présence suffisante ou non de la boisson désirée.

Pour ce faire, un contacteur 31 relié au calculateur ou moyen de pilotage 27 est actionné lors du positionnement du réceptacle 7 contenant la boisson entraînant le décompte d'une horloge.

Selon une variante de réalisation, l'appareil comporte au moins deux contacteurs 28 déterminant deux volumes de boisson à préparer. On notera qu'en fonction de l'appui d'un des contacteurs, le moteur de la pompe péristaltique sera plus ou moins entraîné en rotation.

On comprend à la lecture de la description ci-dessus que l'appareil électrique pour préparer des boissons chaudes prêtes à l'emploi est relativement simple à réaliser et permet dans un laps de temps relativement court de l'ordre de 12 à 14 secondes de chauffer environ 250 ml de boisson à une température de 75 °C.

Par ailleurs, un tel appareil assure le respect des conditions d'hygiène par le fait qu'aucun contact de la boisson avec la main n'est possible et que l'appareil assure après chaque distribution de boisson un nettoyage du bec de distribution, celui-ci étant en outre complètement démontable.

Bien que l'invention ait été décrite en liaison avec un mode de réalisation particulier, elle comprend tous les équivalents techniques des moyens décrits dans le cadre des revendications.

## Revendications

1. Appareil pour préparer des boissons chaudes, notamment des potages, **caractérisé en ce qu'**il comprend un bâti (1) à l'intérieur duquel sont agencés des moyens (2) pour chauffer de l'eau arrivant d'un réseau d'eau potable ou encore d'un récipient et la transformer en vapeur sous pression et des moyens pour diriger cette vapeur vers une chambre (3) qui est traversée par un conduit d'évacuation (4) dans lequel passe la boisson liquide à préparer, ladite boisson étant acheminée à ce conduit (4) jusqu'à un contenant (5) par des moyens de distribution séquentielle (6) de la boisson stockée dans une enveloppe aseptique (61) agencée dans un réceptacle (7) rapporté amovible logé dans le bâti (1).

2. Appareil selon la revendication 1, **caractérisé en ce** le réceptacle (7) de la boisson à préparer est constitué de quatre parois latérales (23) formant un parallélépipède dont l'une (24) au moins est amovible et d'un fond (25) également amovible qui est muni d'une ouverture (26) pour le passage de moyens de connexion (15) entre l'enveloppe (61) et les moyens de distribution séquentielle (6).

3. Appareil selon la revendication 1 ou 2, **caractérisé en ce que** les moyens de distribution séquentielle (6) de la boisson sont constitués d'une pompe péristaltique composée d'un bâti (11) sur lequel est fixé un moteur dont l'axe (0) entraîne en rotation un porte-galets (12) supportant des galets (13) en contact avec un tube déformable (14) relié par l'une de ses extrémités à la poche aseptique (61) contenant la boisson et à son extrémité opposée au conduit d'évacuation (4) de la boisson.

4. Appareil selon la revendication 3, **caractérisé en ce que** le tube déformable (14) comporte un moyen de connexion (15) avec des moyens conjugués de la poche aseptique (61) du type collerette vissable, et **en ce que** ce moyen de connexion (15) comporte des moyens de perforation de ladite poche.

5. Appareil selon l'une quelconque des revendications précédentes, **caractérisé en ce que** la chambre de chauffage (3) et le conduit d'évacuation (4) sont agencés sur un même support amovible désigné « bec distributeur » (16).

6. Appareil selon la revendication 5, **caractérisé en ce que** le bec distributeur (16) amovible est composé d'un premier tube (17) disposé sensiblement verticalement en position d'utilisation dans l'appareil, raccordé perpendiculairement à un second tube (18), notamment par soudure formant le raccord au conduit (10) de la sortie de vapeur sous pression, et d'un troisième tube monté coaxialement, notamment par l'intermédiaire de bagues (21 et 22), à l'intérieur du premier tube (17) formant le conduit d'évacuation (4).

7. Appareil selon la revendication 5 ou 6, **caractérisé en ce que** la sortie de la vapeur est pourvue d'un moyen de raccord rapide (20) avec obturation de l'orifice permettant la jonction avec le deuxième tube (18) du bec distributeur (16) et évitant tous risques d'échappement de la vapeur lors de la déconnexion dudit bec (16).

8. Appareil selon l'une quelconque des revendications précédentes, **caractérisé en ce qu'**il comprend un moyen de pilotage (27), du type calculateur, des moyens de distribution (6) et des moyens (2) pour chauffer l'eau, actionné par au moins un contacteur (28) ou un moyen équivalent.

## Claims

1. Apparatus for preparing hot drinks, more especially soups, **characterised in that** it comprises a framework (1), in the interior of which are disposed means (2) for heating water, which arrives from a drinking water network or even from a vessel, and converting it into steam under pressure, and means for directing this steam towards a chamber (3), which is traversed by an outlet conduit (4) into which passes the liquid drink to be prepared, said drink being conveyed to this conduit (4) as far as a container (5) by sequential dispensing means (6) for the drink stored in an aseptic wrapping (61) disposed in a built-in detachable receptacle (7) housed in the framework (1).

2. Apparatus according to claim 1, **characterised in that** the receptacle (7) for the drink to be prepared is made up of four lateral walls (23) forming a parallelepiped, of which at least one wall (24) is detachable, and of a base (25), also detachable, which is provided with an opening (26) for connecting means (15) to pass between the wrapping (61) and the sequential dispensing means (6).

3. Apparatus according to claim 1 or 2, **characterised in that** the sequential dispensing means (6) for the drink are made up of a peristaltic pump composed of a framework (11), on which is secured a motor, the spindle (0) of which rotationally entrains a roller support (12), which supports rollers (13) in contact with a deformable tube (14), connected by one of its ends to the aseptic pouch (61) containing the drink and at its opposite end to the outlet conduit (4) for the drink.

4. Apparatus according to claim 3, **characterised in that** the deformable tube (14) includes a connecting means (15) for connection to corresponding means of the aseptic pouch (61) of the screwable flange type, and **in that** this connecting means (15) includes means for perforating said pouch.

5. Apparatus according to any of the preceding claims, **characterised in that** the heating chamber (3) and the outlet conduit (4) are disposed on one and the same detachable support, called a "dispensing spout" (16).

6. Apparatus according to claim 5, **characterised in that** the detachable dispensing spout (16) is made up of a first tube (17), which is disposed substantially vertically in the position of use in the apparatus and connected perpendicularly to a second tube (18), more especially by welding, and forming the connection to the conduit (10) for the discharge of pressurised steam, and of a third tube, which is mounted coaxially, more especially through the intermediary of rings (21 and 22), inside the first tube (17) which forms the outlet conduit (4).

7. Apparatus according to claim 5 or 6, **characterised in that** the steam outlet is provided with a rapid connecting means (20), with blocking of the orifice permitting the connection to the second tube (18) of the dispensing spout (16), and avoiding any risks of the steam escaping during the disconnection of said spout (16).

8. Apparatus according to any of the preceding claims, **characterised in that** it includes a control means (27), of the calculator type, for controlling the dispensing means (6) and the means (2) for heating the water, said control means being actuated by at least one contact-maker (28) or an equivalent means.

## Patentansprüche

1. Gerät zur Zubereitung von heißen Getränken, insbesondere Suppen, **dadurch gekennzeichnet, dass** es ein Gehäuse (1) umfasst, in dessen Inneren Mittel (2) angeordnet sind, um das von einem Trinkwassernetz oder auch von einem Behälter kommende Wasser zu erhitzen und es in Dampf unter Druck umzuwandeln, sowie Mittel, um diesen Dampf zu einer Kammer (3) zu leiten, durch die eine Abgabeleitung (4) verläuft, durch die das zuzubereitende flüssige Getränk fließt, wobei das Getränk von Mitteln (6) zur sequentiellen Getränkeausgabe zu dieser Leitung (4) bis zu einem Behältnis (5) geleitet wird und das Getränk in einer aseptischen Hülle (61) gelagert ist, die in einem abnehmbar aufgesetzten Behälter (7) vorgesehen ist, der im Gehäuse (1) angeordnet ist.

2. Gerät nach Anspruch 1, **dadurch gekennzeichnet, dass** der Behälter (7) für das zuzubereitende Getränk von vier ein Parallelepiped bildenden Seitenwänden (23), von denen mindestens eine (24) abnehmbar ist, und von einem Boden (25) gebildet ist, der ebenfalls abnehmbar ist und mit einer Öffnung (26) für den Durchgang von Anschlussmitteln (15) zwischen der Hülle (61) und den Mitteln (6) zur sequentiellen Ausgabe versehen ist.

3. Gerät nach Anspruch 1 oder 2, **dadurch gekennzeichnet, dass** die Mittel (6) zur sequentiellen Getränkeausgabe von einer peristaltischen Pumpe gebildet sind, die aus einem Gehäuse (11) besteht, auf dem ein Motor befestigt ist, dessen Achse (0) einen Rollenträger (12) drehend antreibt, welcher Rollen (13) trägt, die mit einem verformbaren Rohr (14) in Kontakt sind, das mit einem seiner Enden mit der aseptischen Tasche (61) verbunden ist, die das Getränk enthält, und mit seinem gegenüber liegenden Ende an die Abgabeleitung (4) des Getränks angeschlossen ist.

4. Gerät nach Anspruch 3, **dadurch gekennzeichnet, dass** das verformbare Rohr (14) ein Anschlussmittel (15) mit zugeordneten Mitteln an der aseptischen Tasche (61) vom Typ Schraubkragen umfasst, und dass dieses Anschlussmittel (15) Mittel zur Lochung der Tasche aufweist.

5. Gerät nach einem der vorhergehenden Ansprüche, **dadurch gekennzeichnet, dass** die Erhitzungskammer (3) und die Abgabeleitung (4) auf einem gemeinsamen abnehmbaren Träger, "Ausgabetülle" (16) genannt, angeordnet sind.

6. Gerät nach Anspruch 5, **dadurch gekennzeichnet, dass** die abnehmbare Ausgabetülle(16) aus einem ersten Rohr (17), das in der Verwendungsposition im Wesentlichen vertikal in dem Gerät angeordnet und senkrecht mit einem zweiten Rohr (18) insbesondere durch Schweißen verbunden ist, was den Anschluss an die Leitung (10) des Ausganges des Dampfs unter Druck bildet, und einem dritten Rohr besteht, das die Abgabeleitung (4) bildet und das koaxial insbesondere mit Hilfe von Ringen (21 und 22) im Inneren des ersten Rohrs (17) befestigt ist.

7. Gerät nach Anspruch 5 oder 6, **dadurch gekennzeichnet, dass** der Dampfausgang mit einem Schnellanschlussmittel (20) mit einem Öffnungsverschluss versehen ist, das die Verbindung mit dem zweiten Rohr (18) der Ausgabetülle (16) ermöglicht und jede Gefahr eines Entweichens des Dampfes beim Entfernen von der Tülle (16) vermeidet.

8. Gerät nach einem der vorhergehenden Ansprüche, **dadurch gekennzeichnet, dass** es ein Steuermittel (27) vom Typ Rechner, Ausgabemittel (6) und Mittel (2) zur Erhitzung des Wassers aufweist, betätigt durch mindestens einen Schalter (28) oder ein gleichwertiges Mittel.
